# DEMANDE DE BREVET EUROPEEN

(11) **EP 2 081 346 A2**
(43) Date de publication de la demande: **22.07.2009**
(21) Numéro de dépôt: 09290035.6
(22) Date de dépôt: 16.01.2009
(51) Int. Cl.: H04L 29/06, H04N 7/173

(54) **Système et procédé de commande à distance de téléchargement sur un dispositif multimédia communicant à partir d'un terminal communicant via au moins un réseau de communication**

(30) Priorité: 16.01.2008 FR 0800224
(71) Demandeur: Societé Française du Radiotéléphone, 75008 Paris (FR)
(72) Inventeur: Baudy, Marc, 92400 Courbevoie (FR)
(74) Mandataire: Debay, Yves

(57) **Abrégé**

La présente invention concerne un système et un procédé de commande à distance, à partir d'au moins un terminal communicant, de téléchargement de fichier sur au moins un dispositif multimédia communicant, via au moins un réseau de communication supporté par au moins un équipement opérateur. Le procédé comporte les étapes suivantes :
- transmission (52), du terminal communicant vers le module de gestion de téléchargement, d'une requête de téléchargement de fichier comportant au moins un identifiant de localisation du fichier à télécharger,
- identification (54) d'au moins un identifiant d'au moins un dispositif multimédia communicant de l'utilisateur, par un module d'identification de l'équipement opérateur, à partir d'au moins un identifiant transmis par le terminal communicant,
- activation (56) du dispositif multimédia communicant et mise en relation avec le module de contrôle de téléchargement, sous le contrôle d'un module de contrôle de téléchargement de l'équipement opérateur,
- téléchargement (57) du fichier par le dispositif multimédia communicant.

## Description

La présente invention se rapporte au domaine des télécommunications au travers d'au moins un réseau de communication et propose plus particulièrement un procédé de commande à distance, à partir d'un terminal communicant, de téléchargement de fichier sur un dispositif multimédia communicant, via au moins un réseau de communication. L'invention concerne également un système de commande à distance de téléchargement.

Le domaine des télécommunications connaît un essor considérable qui s'accompagne du développement de plus en plus de dispositifs de communication divers et de plus en plus sophistiqués. Les réseaux de communication se développent et les services proposés deviennent de plus en plus variés. Les terminaux communicants, souvent mobiles, des utilisateurs permettent de plus en plus d'accéder à tous ces médias, par exemple à partir des divers terminaux communicants connectés à Internet via les connexions fournies par les modems ou par des dispositifs multimédia communicants (par exemple ceux connus sous le nom de « box »), par exemple en accédant à des interfaces spécialisées telles que celles fournies par des serveurs sur divers types de réseaux de communication comme par exemple Internet, mais également les réseaux de téléphonie mobile modernes (par exemple de type 3G+) offrant de plus en plus de services aux utilisateurs. Ainsi, de nombreux types de terminaux communicants permettent d'accéder aux divers services proposés, via au moins un réseau de communication (qui devient souvent une combinaison de plusieurs types de réseaux différents). Un utilisateur a donc aujourd'hui la possibilité de télécharger des fichiers sur des serveurs Web, sur des serveurs FTP, sur des réseaux Poste à Poste, des passerelles WAP, etc....

Un problème dans le domaine du téléchargement de fichier concerne le temps des téléchargements qui est toujours trop long pour les utilisateurs. En effet, le processus de téléchargement se fait de manière générale toujours par les mêmes étapes de lancement du téléchargement de fichier via un logiciel adapté à partir d'un terminal connecté à au moins un réseau de communication, puis d'attente de la réception des fichiers. Ce processus présente l'inconvénient pour l'utilisateur d'être trop long et de ne pas lui permettre d'accéder immédiatement au contenu téléchargé : le téléchargement des fichiers est plus ou moins long en fonction de la bande passante sur le serveur ou réseau mettant les fichiers à disposition ; le temps de téléchargement des fichiers, dont la taille est en constante augmentation (photos numériques, musique de qualité CD, films en qualité DVD, ...), peut prendre quelques heures voire quelques jours, obligeant l'utilisateur à laisser son terminal sous tension et connecté.

Il est connu dans l'art antérieur des dispositifs multimédia communicants, souvent regroupés sous le terme de « box », qui cumulent des fonctions de modem de type xDSL (« Digital Subscriber Line », selon la terminologie anglaise), de services de téléphonie (souvent illimitée, notamment lorsque la téléphonie est faite sous IP) et de services de télévision (avec un grand nombre de chaînes disponibles) et même de vidéo à la demande. Ces dispositifs multimédia communicants permettent de recevoir des appels téléphoniques et assurent une fonction de réception de flux TV, mais permettent également l'accès à divers médias directement à partir d'un téléviseur, par exemple via des services de téléchargement de vidéo à la demande. Certains de ces dispositifs sont dotés de disques durs, par exemple d'une capacité de 40 à 80 Go (Giga octets) ou supérieure, pour permettre d'enregistrer des programmes TV ou d'enregistrer des fichiers (par exemple vidéo) à la demande. Certains fournisseurs d'accès Internet (FAI) proposent ainsi ces dispositifs en version décodeur TVHD (haute définition) équipée d'un disque dur. Le téléspectateur peut même visionner un programme télévisé avec un léger différé (time-shifting) tout en poursuivant l'enregistrement.

Le problème du temps de téléchargement est résolu dans l'art antérieur notamment par la technologie de flux continu avec mise en mémoire tampon, connue sous le nom de « streaming » (selon la terminologie anglaise). Par exemple, dans le cas des vidéos à la demande ou de certains cas de téléchargements de fichiers de type média destinés à être « consommés » immédiatement, les systèmes de communication modernes utilisant le « streaming » permettent que l'utilisateur ait accès au contenu du fichier média alors que son téléchargement n'est pas encore terminé. Ainsi, un terminal communicant permet à l'utilisateur de télécharger un média et d'accéder à son contenu avant la fin du téléchargement, ce qui résout le problème de l'attente. De même, certains des dispositifs multimédia de type box utilisent le streaming pour la diffusion des programmes TV, mais également dans le cas de vidéo à la demande où le fichier est téléchargé et visualisable immédiatement tout en restant accessible pendant une durée déterminée (de l'ordre de quelques jours par exemple), comme dans le cas d'une location vidéo par exemple.

Néanmoins, ce type de solution présente l'inconvénient de nécessiter l'implémentation de serveurs spécifiques gérant les flux de transmission de données et de nécessiter une grande bande passante pour une qualité correcte du média (ou, lorsque la bande passante est insuffisante, de dégrader la qualité du média pour permettre le téléchargement sans attente). Ainsi, ce type de solution ne peut pas se généraliser outre mesure car l'utilisation de la bande passante par les utilisateurs peut rapidement devenir une contrainte limitant la qualité des services. Ainsi, si le média n'est pas destiné à être « consommé » (e.g., visualisé et/ou écouté) immédiatement, il n'est pas nécessaire de faire appel à cette technologie et il est même intéressant de trouver une autre solution moins coûteuse en terme de bande passante.

Dans ce contexte, il est intéressant de proposer une solution permettant le téléchargement de fichier sur un dispositif multimédia communicant de type box qui ne présente pas l'inconvénient de l'attente du téléchargement pour l'utilisateur et qui évite d'avoir recours au streaming trop coûteux, notamment en terme de bande passante.

La présente invention a pour but de supprimer certains inconvénients de l'art antérieur en proposant un procédé permettant à un utilisateur de commander à distance, à partir d'un terminal communicant auquel il a accès à un moment donné, le téléchargement autonome d'un fichier par un dispositif multimédia communicant, évitant notamment à l'utilisateur d'attendre le téléchargement et aux fournisseurs de recourir à des techniques utilisant trop de bande passante.

Ce but est atteint par un procédé de commande à distance, à partir d'au moins un terminal communicant, de téléchargement de fichier sur au moins un dispositif multimédia communicant, via au moins un réseau de communication supporté par au moins un équipement opérateur, **caractérisé en ce qu**'il comporte les étapes suivantes :
- transmission, du terminal communicant vers le module de gestion de téléchargement, d'une requête de téléchargement de fichier comportant au moins un identifiant de localisation du fichier à télécharger,
- identification d'au moins un identifiant d'au moins un dispositif multimédia communicant de l'utilisateur, par le module d'identification de l'équipement opérateur, à partir d'au moins un identifiant transmis par le terminal communicant,
- envoi, par un module de contrôle de téléchargement de l'équipement opérateur, vers le dispositif multimédia communicant, d'une demande d'activation du dispositif multimédia communicant et de mise en relation avec le module de contrôle de téléchargement de l'équipement opérateur,
- activation du dispositif multimédia communicant et mise en relation avec le module de contrôle de téléchargement,
- téléchargement du fichier par le dispositif multimédia communicant.

Selon une autre particularité, l'étape de transmission de la requête de téléchargement de fichier est précédée d'une étape de consultation, par l'utilisateur, d'un catalogue de fichiers téléchargeables sur une interface utilisateur du module de gestion, et comporte une étape de sélection, par l'utilisateur, d'au moins un fichier à télécharger, grâce à des moyens d'interface utilisateur et à un module de navigation du terminal communicant permettant l'accès à cette interface utilisateur du module de gestion de l'équipement opérateur.

Selon une autre particularité, le procédé comporte une étape d'identification de l'utilisateur émetteur de la requête par un module d'identification de l'équipement opérateur, grâce à au moins un identifiant transmis par le terminal communicant, cette étape étant mise en oeuvre grâce à au moins un identifiant reconnu par le module d'identification lors d'une étape de connexion du terminal communicant au module de gestion de téléchargement ou lors de la transmission de la requête de téléchargement de fichier par le terminal communicant vers le module de gestion de téléchargement.

Selon une autre particularité, l'étape d'identification d'au moins un identifiant d'au moins un dispositif multimédia communicant de l'utilisateur comporte une étape de consultation, par le module d'identification de l'équipement opérateur, d'une base de données de l'équipement opérateur stockant une pluralité d'identifiants d'utilisateurs en relation chacun avec au moins un identifiant d'au moins un dispositif multimédia communicant de l'utilisateur.

Selon une autre particularité, l'étape d'envoi de la demande d'activation et de mise en relation comporte une étape d'envoi, par le module de contrôle du téléchargement, d'un ordre d'activation des moyens de traitement du dispositif multimédia et d'une demande d'indication de l'espace de stockage disponible dans des moyens de mémorisation du dispositif multimédia communicant.

Selon une autre particularité, l'étape d'activation du dispositif multimédia communicant et de mise en relation avec le module de contrôle de téléchargement comporte une étape d'activation des moyens de traitement du dispositif multimédia et de consultation des moyens de mémorisation pour déterminer l'espace disponible puis une étape de réponse du dispositif multimédia indiquant l'espace disponible au module de contrôle de téléchargement.

Selon une autre particularité, l'étape d'activation du dispositif multimédia communicant et de mise en relation avec le module de contrôle de téléchargement comporte une étape de téléchargement, par le dispositif multimédia communicant, à partir du module de contrôle de téléchargement, de données concernant le fichier à télécharger et représentatives au moins de la taille du fichier à télécharger et de l'identifiant de localisation du fichier à télécharger.

Selon une autre particularité, l'étape de téléchargement de données concernant le fichier à télécharger comporte une étape de lancement du téléchargement des données concernant le fichier à télécharger, par le dispositif multimédia communicant, puis une étape de demande du statut de ce téléchargement, par le module de contrôle de téléchargement, suivie d'une étape de réponse par le dispositif multimédia communicant indiquant au module de contrôle de téléchargement l'état d'avancement du téléchargement des données concernant le fichier à télécharger.

Selon une autre particularité, l'étape de téléchargement de données concernant le fichier à télécharger comporte une étape d'envoi, par le dispositif multimédia communicant vers le module de contrôle de téléchargement, d'une confirmation de fin de téléchargement des données concernant le fichier et de prise en charge du téléchargement du fichier, le module de contrôle de téléchargement transmettant cette confirmation au module de gestion de téléchargement qui met alors en oeuvre une étape d'envoi, vers le terminal communicant émetteur de la requête, d'un message de confirmation de la prise en charge du téléchargement du fichier par le dispositif multimédia communicant.

Selon une autre particularité, l'étape d'envoi, par le dispositif multimédia communicant vers le module de contrôle de téléchargement, d'une confirmation de fin de téléchargement des données concernant le fichier, est suivie d'une étape de demande, par le module de contrôle de téléchargement, du lancement du téléchargement par le dispositif multimédia communicant.

Selon une autre particularité, l'étape de téléchargement du fichier par le dispositif multimédia communicant comporte une étape de lancement du téléchargement du fichier, par le dispositif multimédia communicant, puis, lorsque le téléchargement du fichier est terminé, une étape d'envoi, par le dispositif multimédia communicant vers le module de contrôle de téléchargement, d'une confirmation de fin de téléchargement du fichier.

Selon une autre particularité, l'étape de téléchargement du fichier s'accompagne d'au moins une étape de demande du statut de ce téléchargement, par le module de contrôle de téléchargement, suivie d'une étape de réponse par le dispositif multimédia communicant indiquant au module de contrôle de téléchargement l'état d'avancement du téléchargement du fichier à télécharger.

Selon une autre particularité, dans le cas particulier d'un fichier protégé par un système de protection numérique de type DRM, l'étape de téléchargement du fichier est suivie d'au moins une étape de demande des droits relatifs à la lecture du fichier, par le dispositif multimédia communicant vers le module de contrôle de téléchargement ou un autre module ad hoc de l'équipement opérateur.

Selon une autre particularité, toujours dans le cas particulier d'un fichier protégé par un système de protection numérique de type DRM, l'étape de demande des droits relatifs à la lecture du fichier est suivie d'une étape d'envoi par le module de contrôle de téléchargement ou autre module ad hoc de l'équipement opérateur, de ces droits vers le dispositif multimédia communicant, le dispositif multimédia communicant décryptant alors le fichier protégé grâce aux droits obtenus.

Selon une autre particularité, l'étape d'envoi d'une confirmation de fin de téléchargement du fichier est suivie d'une étape d'envoi, par le module de contrôle de téléchargement vers le terminal communicant, d'un message de confirmation de la fin du téléchargement du fichier par le dispositif multimédia communicant, de façon à informer l'utilisateur de la disponibilité du fichier dans les moyens de mémorisation de son dispositif multimédia communicant.

La présente invention a également pour but de supprimer certains inconvénients de l'art antérieur en proposant un système permettant à un utilisateur de commander à distance, à partir d'un terminal communicant auquel il a accès à un moment donné, le téléchargement autonome d'un fichier par un dispositif multimédia communicant, évitant notamment à l'utilisateur d'attendre le téléchargement et aux fournisseurs de recourir à des techniques utilisant trop de bande passante.

Ce but est atteint par un système de commande à distance, à partir d'au moins un terminal communicant, de téléchargement de fichier sur au moins un dispositif multimédia communicant, via au moins un réseau de communication supporté par au moins un équipement opérateur, **caractérisé en ce qu**'il comporte les appareils suivants chacun équipé de moyens de communication via au moins un réseau de communication :
- au moins un dispositif multimédia communicant comportant des moyens de mémorisation et des moyens de traitement agencés notamment pour télécharger au moins un fichier dans ses moyens de mémorisation,
- au moins terminal communicant comportant des moyens d'interface utilisateur permettant l'affichage et la saisie d'informations, et au moins un module de navigation agencé pour accéder à au moins une interface utilisateur d'au moins un module de gestion de téléchargement de l'équipement opérateur et transmettre une requête de téléchargement de fichier comportant au moins un identifiant de localisation du fichier à télécharger,
- au moins un équipement opérateur comportant au moins un module de gestion de téléchargement fournissant au moins une interface utilisateur pour la commande de fichier, au moins un module d'identification agencé pour identifier au moins un identifiant transmis par les terminaux communicants accédant au module de gestion, et identifier au moins un dispositif multimédia communicant de l'utilisateur à partir de l'identifiant transmis par les terminaux, au moins un module de contrôle de téléchargement agencé pour requérir à distance l'activation et la mise en relation du dispositif multimédia communicant identifié et pour contrôler le téléchargement de fichier par le dispositif multimédia communicant.

Selon une autre particularité, l'interface utilisateur du module de gestion comporte un catalogue de fichiers téléchargeables, consultable par les utilisateurs via une passerelle de type Internet du module de gestion.

Selon une autre particularité, le module de gestion coopère avec le module d'identification en lui fournissant un identifiant transmis par le terminal communicant lorsque ce dernier se connecte au module de gestion ou qu'il émet la requête de téléchargement de fichier.

Selon une autre particularité, le module d'identification de l'équipement opérateur comporte des moyens de consultation d'une base de données de l'équipement opérateur stockant une pluralité d'identifiants d'utilisateurs en relation chacun avec au moins un identifiant d'au moins un dispositif multimédia communicant de l'utilisateur.

Selon une autre particularité, les moyens de traitement du dispositif multimédia communicant sont agencés pour qu'au moins un port de communication du dispositif soit toujours ouvert et pour rester à l'écoute des transmissions sur ce port, le module de contrôle du téléchargement comportant des moyens d'envoi, via ce port, d'un ordre d'activation des moyens de traitement du dispositif multimédia.

Selon une autre particularité, le module de contrôle de téléchargement comporte des moyens d'envoi d'une demande d'indication de l'espace de stockage disponible dans les moyens de mémorisation du dispositif multimédia communicant, les moyens de traitement de ce dernier étant agencés pour consulter l'espace disponible dans les moyens de mémorisation et répondre en indiquant l'espace disponible au module de contrôle de téléchargement.

Selon une autre particularité, le module de contrôle de téléchargement comporte des moyens de création et d'envoi, vers le dispositif multimédia communicant, de données concernant le fichier à télécharger et représentatives au moins de la taille du fichier à télécharger et de l'identifiant de localisation du fichier à télécharger, les moyens de traitement du dispositif multimédia communicant gérant le téléchargement de ces données dans ses moyens de mémorisation.

Selon une autre particularité, le module de contrôle de téléchargement et le dispositif multimédia communicant coopèrent lors du téléchargement des données concernant le fichier à télécharger pour le lancement du téléchargement par le dispositif multimédia et pour indiquer au module de contrôle de téléchargement l'état d'avancement du téléchargement des données concernant le fichier à télécharger.

Selon une autre particularité, les moyens de traitement du dispositif multimédia communicant sont agencés pour détecter la fin du téléchargement des données concernant le fichier à télécharger et pour envoyer au module de contrôle de téléchargement une confirmation de fin de téléchargement des données concernant le fichier et de prise en charge du téléchargement du fichier, le module de contrôle de téléchargement transmettant cette confirmation au module de gestion de téléchargement comportant des moyens de création et d'envoi, vers le terminal communicant émetteur de la requête, d'un message de confirmation de la prise en charge du téléchargement du fichier par le dispositif multimédia communicant.

Selon une autre particularité, le module de contrôle de téléchargement comporte des moyens de création et d'envoi, vers le dispositif multimédia communicant, d'une demande de lancement du téléchargement par le dispositif multimédia communicant.

Selon une autre particularité, les moyens de traitement du dispositif multimédia communicant sont agencés pour le lancement du téléchargement par le dispositif multimédia et pour créer et transmettre au module de contrôle de téléchargement, une confirmation de fin de téléchargement du fichier.

Selon une autre particularité, le module de contrôle de téléchargement et le dispositif multimédia communicant coopèrent lors du téléchargement du fichier pour indiquer au module de contrôle de téléchargement l'état d'avancement du téléchargement du fichier.

Selon une autre particularité, le module de contrôle de téléchargement comporte des moyens de création et d'envoi, vers le terminal communicant, d'un message de confirmation de la fin du téléchargement du fichier par le dispositif multimédia communicant, de façon à informer l'utilisateur de la disponibilité du fichier dans les moyens de mémorisation de son dispositif multimédia communicant.

Selon une autre particularité, le terminal communicant est un téléphone mobile équipé de moyens d'accès à au moins une passerelle de type Internet du module de gestion, via au moins un réseau de communication.

Selon une autre particularité, la passerelle de type Internet du module de gestion est une passerelle de type WAP.

Selon une autre particularité, le terminal communicant est un ordinateur équipé de moyens d'accès à au moins une passerelle de type Internet, via au moins un réseau de communication.

Selon une autre particularité, l'équipement opérateur fournit un réseau de téléphonie avec message de type court pour l'envoi de la confirmation de fin de téléchargement vers le terminal communicant et/ou un réseau de type Internet et/ou WAP pour l'accès du terminal communicant au module de gestion de téléchargement et un réseau de type xDSL entre le module de contrôle de téléchargement et le dispositif multimédia communicant.

Selon une autre particularité, les moyens de traitement du dispositif multimédia communicant sont agencés pour obtenir du module de contrôle de téléchargement ou d'un autre module ad hoc de l'équipement opérateur des droits relatifs à la lecture du fichier dans le cas particulier d'un fichier protégé par un système de protection numérique de type DRM et pour décrypter le fichier grâce à ces droits obtenus.

Selon une autre particularité, le module de contrôle de téléchargement ou un autre module ad hoc de l'équipement opérateur est agencé pour fournir, en réponse à une requête d'un dispositif multimédia communicant, des droits relatifs à la lecture du fichier dans le cas particulier d'un fichier protégé par un système de protection numérique de type DRM.

D'autres particularités et avantages de la présente invention apparaîtront plus clairement à la lecture de la description ci-après, faite en référence aux dessins annexés, dans lesquels :
- la figure 1 représente le système de commande à distance de téléchargement selon un mode de réalisation de l'invention,
- la figure 2 représente le procédé de commande à distance de téléchargement selon un mode de réalisation de l'invention,

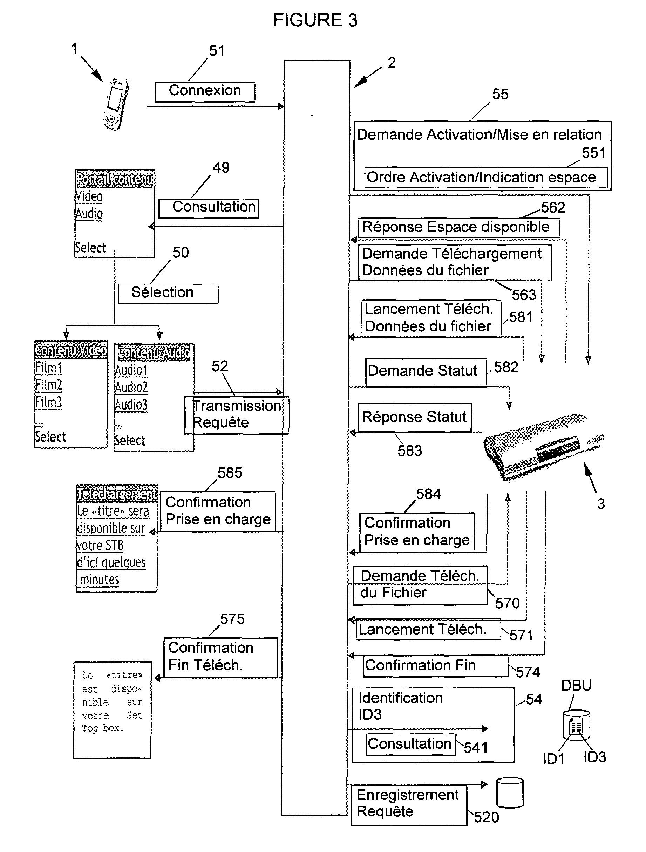

- la figure 3 représente des étapes détaillées du procédé selon des variantes de réalisation de l'invention.

La présente invention concerne un système et un procédé de commande à distance, à partir d'au moins un terminal (1) communicant, de téléchargement de fichier sur au moins un dispositif (3) multimédia communicant, via au moins un réseau (N) de communication supporté par au moins un équipement (2) opérateur. Par le terme fichier, on entend tout type de contenu numérique téléchargeable, par exemple de type multimédia. Il est évident que ce terme couvre également la possibilité de plusieurs fichiers, notamment si le contenu multimédia nécessite plusieurs fichiers (par exemple un contenu audio et vidéo).

Le système de commande à distance selon l'invention permet de commander le téléchargement de fichier sur au moins un dispositif (3) multimédia communicant, à partir d'au moins un terminal (1) communicant, via au moins un réseau (N) de communication supporté par au moins un équipement (2) opérateur. Ce système comporte au moins un dispositif (3) multimédia, au moins terminal (1) communicant et au moins un équipement (2) opérateur. Ces différents appareils sont chacun équipés de moyens de communication via au moins un réseau (N) de communication. Par le terme au moins un réseau (N) de communication, on entend ici des réseaux de communication numériques, de type téléphonie mobile, mais également de type Internet, par exemple de type WAP (« Wireless Application Protocol », selon la terminologie anglo-saxonne) pour être accessible à partir de n'importe quel téléphone mobile, mais également de type Internet classique pour être accessible à partir de téléphones mobiles de nouvelle génération ou à partir d'ordinateurs connectés. Egalement, par le terme terminal (1) communicant, on entend ici n'importe quel type de terminal muni de moyens de communication sur au moins un réseau (N) de communication. En effet, comme mentionné précédemment, les réseaux modernes permettent de communiquer via différents médias. Par exemple, les réseaux de téléphonie mobile permettent une navigation de type Internet mais également l'envoi de courriers électroniques (emails ou courriels, selon les terminologies utilisées d'après les langues respectivement anglaise et française). Un terminal donné pourra donc souvent accéder à différents réseaux de communication et on regroupe ici sous le terme de « au moins un réseau de communication » l'ensemble des réseaux disponibles à partir d'un terminal, sachant que ce terminal peut être de n'importe quel type et que le réseau peut en fait donner accès à plusieurs réseaux différents. Ainsi, à titre d'exemple, le terminal communicant pourra consister en un ordinateur muni d'une connexion Internet ou en un téléphone mobile, de dernière génération ou non, pour téléphoner et/ou naviguer sur Internet et/ou sur le WAP et/ou envoyer des emails et/ou par n'importe quel type de moyen de communication à courte ou longue distance. L'essentiel ici consiste en ce que le système et le procédé permettent à un utilisateur d'accéder à une interface de gestion pour commander un téléchargement, via au moins un réseau (N) de communication. Ce réseau est déployé, de façon connue en soi, par des opérateurs de communication, grâce à un ensemble de terminaux et/ou de serveurs et/ou de relais et/ou d'antennes etc., regroupés ici sous le terme « d'équipement opérateur ». Le système et le procédé s'inscrivant dans cet équipement opérateur, pourront être totalement intégrés dans l'équipement opérateur d'un opérateur de communication, sauf en ce qui concerne les terminaux communicants des utilisateurs bien entendu, puisque ces terminaux ne sont pas intégrés dans l'équipement opérateur mais communiquent grâce à ce dernier et sauf en ce qui concerne le dispositif (3) multimédia communicant qui est présent chez les utilisateurs et accède à au moins un réseau (N) de communication. Comme mentionné précédemment, les dispositifs (3) multimédia communicants sont, dans certains modes de réalisation préférés de l'invention, des dispositifs de type box cumulant les fonctions de modem xDSL, de service de téléphonie et de services TV et de vidéo à la demande. Cependant, l'essentiel ici est que le dispositif (3) multimédia communicant possède des moyens d'accès au réseau ((N) et supporte des services de téléchargement de fichier à la demande (par exemple du type vidéo à la demande). Ainsi, le dispositif (3) multimédia sera, dans certains modes de réalisation, connecté à l'équipement (2) opérateur via un réseau de type xDSL, notamment de TV par ADSL. Ce type de réseau est sécurisé et permet de commander le dispositif (3) à distance sans trop de risque pour le dispositif (3). De plus, dans ce type de réseau, le dispositif (3) possède une adresse IP fixe (« Internet Protocol » selon la terminologie anglo-saxonne), ce qui permet de la localiser facilement. Cependant, dans certaines variantes de réalisation, le dispositif (3) multimédia sera connecté à un réseau de type Internet classique. Dans ce cas, l'invention prévoira un protocole sécuritaire pour la commande du dispositif par l'équipement (2) opérateur et un identifiant particulier pour localiser le dispositif et communiquer avec lui au sein du réseau. Ainsi, le système pourra comporter différents types de serveurs qui pourront, dans certains modes de réalisation, être implémentés au sein des équipements opérateurs de différents opérateurs de communication. Ces serveurs pourront être implémentés dans les équipements d'un seul opérateur s'il cumule les différents types de connexions possibles décrites ici.

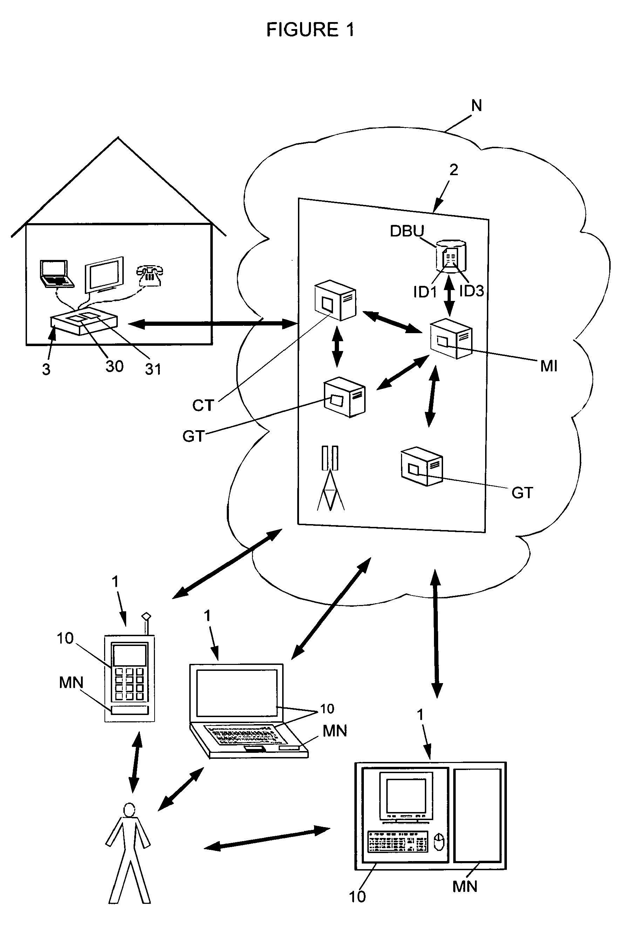

Comme particulièrement visible sur la figure 1, le système selon l'invention comporte au moins un dispositif (3) multimédia communicant comportant des moyens (31) de mémorisation et des moyens (30) de traitement agencés notamment pour télécharger au moins un fichier dans ses moyens (31) de mémorisation, au moins terminal (1) communicant comportant des moyens (10) d'interface utilisateur permettant l'affichage et la saisie d'informations, et au moins un module (MN) de navigation agencé pour accéder à au moins une interface utilisateur d'au moins un module (GT) de gestion de téléchargement de l'équipement (2) opérateur et transmettre une requête de téléchargement de fichier comportant au moins un identifiant de localisation (IL) du fichier à télécharger. Le système comporte également au moins un équipement (2) opérateur comportant au moins un module (GT) de gestion de téléchargement fournissant au moins une interface utilisateur pour la commande de fichier, au moins un module (MI) d'identification agencé pour identifier au moins un identifiant (ID1) transmis par les terminaux (1) communicants accédant au module (GT) de gestion, et identifier au moins un dispositif (3) multimédia communicant de l'utilisateur à partir de l'identifiant (ID1) transmis par les terminaux (1), au moins un module (CT) de contrôle de téléchargement agencé pour requérir à distance l'activation et la mise en relation du dispositif (3) multimédia communicant identifié et pour contrôler le téléchargement de fichier par le dispositif (3) multimédia communicant. Par le terme de module, on entend ici un applicatif exécuté sur un serveur de l'équipement opérateur. Bien entendu, ces modules pourront être dans les mêmes équipements ou dans des équipements différents. Les modules sont décrits ici en termes fonctionnels et aucune limitation quant à leur implémentation ne doit être envisagée. En effet, il est évident que les modules décrits séparément ici peuvent naturellement faire partie d'une même application sur un même serveur ou être différents applicatifs sur un même serveur ou être différents applicatifs sur différents serveurs. De même, le terme serveur ne doit pas être interprété de façon limitative et correspond en fait à n'importe quel type de dispositif capable de mettre en oeuvre les fonctions décrites ici, qu'il faille un seul ou plusieurs dispositifs (par exemple, dans le cas de réseaux de téléphonie, il faut bien souvent plusieurs relais, antennes et serveurs pour mettre en oeuvre une des fonctions décrites ici et l'invention prévoit bien entendu ce type d'organisation).

Dans certains modes de réalisation, le terminal (1) communicant est un téléphone mobile équipé de moyens d'accès à au moins une passerelle de type Internet du module (GT) de gestion, via au moins un réseau (N) de communication. Dans ce mode de réalisation, une variante consiste en ce que la passerelle de type Internet du module (GT) de gestion est une passerelle de type WAP. Dans une autre variante, la passerelle sera de type Internet classique, par exemple lorsque le téléphone mobile est doté de moyens d'accès à un réseau de type Internet classique. Dans un autre mode de réalisation, le terminal (1) communicant est un ordinateur équipé de moyens d'accès à au moins une passerelle de type Internet, via au moins un réseau (N) de communication. Dans d'autres modes de réalisation, le terminal (1) communicant pourra être un assistant digital personnel (PDA, pour l'anglais « Personal Digital Assistant »), un terminal multimédia communicant, par exemple du type développé par Apple™ et connu sous le nom de « Ipod touch » ou n'importe quel autre type de terminal possédant les moyens décrits ici. De plus, selon divers modes de réalisation l'équipement (2) opérateur fournit un réseau de téléphonie avec message de type court (SMS, pour l'anglais « short message service ») pour l'envoi d'une confirmation de fin de téléchargement vers le terminal (1) communicant et/ou un réseau de type Internet et/ou WAP pour l'accès du terminal (1) communicant au module de gestion (GT) de téléchargement et un réseau de type xDSL entre le module (CT) de contrôle de téléchargement et le dispositif (3) multimédia communicant, comme mentionné précédemment.

L'interface utilisateur du module (GT) de gestion comporte un catalogue de fichiers téléchargeables, consultable par les utilisateurs via une passerelle de type Internet du module (GT) de gestion. Cette passerelle pourra être de type WAP et/ou Internet classique comme expliqué précédemment, en fonction du type de terminal (1) communicant utilisé. Ainsi, l'utilisateur se connecte au serveur supportant cette passerelle et consulte les fichiers dont il peut commander le téléchargement sur son dispositif (3) multimédia.

Dans certains modes de réalisation, le module (GT) de gestion coopère avec le module d'identification (MI) en lui fournissant un identifiant (ID1) transmis par le terminal (1) communicant lorsque ce dernier se connecte au module (GT) de gestion ou qu'il émet la requête de téléchargement de fichier. Dans certains modes de réalisation préférés de l'invention, l'identifiant (ID1) est un identifiant du terminal (1) communicant émetteur de la requête. Dans d'autres modes, il pourra être un identifiant de l'utilisateur, préalablement enregistré auprès de l'opérateur fournissant les services décrits ici. Dans une variante préférée, l'identifiant (ID1) du terminal (1) communicant est le numéro de téléphone mobile de l'utilisateur (le numéro « MSISDN » pour l'anglais « Mobile Subscriber Integrated Services Digital Network Number »). Ainsi, lorsque l'utilisateur accède à l'interface pour commander un téléchargement, il est automatiquement identifié par l'équipement (2) opérateur. Le module (MI) d'identification de l'équipement (2) opérateur comporte des moyens de consultation d'une base de données (DBU) de l'équipement (2) opérateur stockant une pluralité d'identifiants (ID1) d'utilisateurs en relation chacun avec au moins un identifiant (ID3) d'au moins un dispositif (3) multimédia communicant de l'utilisateur. Ainsi, lorsque l'utilisateur est identifié automatiquement grâce à son terminal communicant, l'équipement (2) opérateur connaît automatiquement quel dispositif (3) multimédia devra être contacté pour la mise en oeuvre du service. Dans d'autres variantes possibles, l'utilisateur pourra envoyer directement un identifiant (ID3) de son dispositif (3) multimédia de façon à éviter de nécessiter la consultation d'une base de données pour la bijection entre l'identifiant (ID1) de l'utilisateur/terminal et l'identifiant (ID3) du dispositif (3) multimédia.

Dans certains modes de réalisation, les moyens (30) de traitement du dispositif (3) multimédia communicant sont agencés pour qu'au moins port de communication du dispositif (3) soit toujours ouvert et pour rester à l'écoute des transmissions sur ce port, le module (CT) de contrôle du téléchargement comportant des moyens d'envoi, via ce port, d'un ordre d'activation des moyens (30) de traitement du dispositif (3) multimédia. Par exemple, le dispositif (3) multimédia de type « box » peut avoir un port UDP ouvert en permanence (« User Datagram Protocol » selon la terminologie anglo-saxonne qui consiste en un port d'une couche de transport selon les protocoles de transmission connus sur les réseaux de type Internet), à l'écoute des transmissions sur le réseau TV ADSL privé sur lequel il accède aux contenus multimédia. Dans d'autres modes de réalisation, le dispositif (3) est agencé pour ouvrir régulièrement un port ou pour régulièrement consulter une messagerie, de façon à observer si des ordres lui sont parvenus.

Dans certains modes de réalisation, le module (CT) de contrôle de téléchargement comporte des moyens d'envoi d'une demande d'indication de l'espace de stockage disponible dans les moyens (31) de mémorisation du dispositif (3) multimédia communicant. Par exemple, lorsque l'équipement (2) opérateur demande l'activation du dispositif (3) multimédia via son port ouvert en permanence, il peut lui commander de s'activer et lui demander l'espace disponible dans ses moyens de mémorisation (par exemple un disque dur interne comme mentionné précédemment). En variante, le module (CT) de contrôle de téléchargement peut demander plus spécifiquement s'il y a la place nécessaire au téléchargement puisque la taille du fichier commandé lui est connue. Les moyens de traitement (30) dispositif (3) multimédia communicant sont agencés pour consulter l'espace disponible dans les moyens (31) de mémorisation et répondre en indiquant l'espace disponible au module (CT) de contrôle de téléchargement (ou par exemple indiquer que la place nécessaire est disponible). Dans certaines variantes de réalisation, le module (CT) de téléchargement peut envoyer une demande de téléchargement par le dispositif (3) multimédia de données concernant le fichier. Selon diverses variantes, cette demande pourra comporter des indications de taille du fichier à télécharger et une demande d'indication de place disponible dans le dispositif (3) multimédia. Ainsi, les diverses variantes de réalisation permettent de demander la place disponible tout en indiquant la taille du fichier.

Dans certains modes de réalisation, le module (CT) de contrôle de téléchargement comporte des moyens de création et d'envoi, vers le dispositif (3) multimédia communicant, de données concernant le fichier à télécharger et représentatives au moins de la taille du fichier à télécharger et de l'identifiant de localisation (IL) du fichier à télécharger, les moyens (30) de traitement du dispositif (3) multimédia communicant gérant le téléchargement de ces données dans ses moyens de mémorisation (31). Le module (CT) de contrôle de téléchargement et le dispositif (3) multimédia communicant coopèrent lors du téléchargement des données concernant le fichier à télécharger pour le lancement du téléchargement par le dispositif (3) multimédia et pour indiquer au module (CT) de contrôle de téléchargement l'état d'avancement du téléchargement des données concernant le fichier à télécharger. De plus, les moyens (30) de traitement du dispositif (3) multimédia communicant pourront être agencés pour détecter la fin du téléchargement des données concernant le fichier à télécharger et pour envoyer au module (CT) de contrôle de téléchargement une confirmation de fin de téléchargement des données concernant le fichier et de prise en charge du téléchargement du fichier. Dans certains modes de réalisation, le module (CT) de contrôle de téléchargement transmet cette confirmation au module (GT) de gestion de téléchargement. Ce dernier comporte des moyens de création et d'envoi, vers le terminal (1) communicant émetteur de la requête, d'un message de confirmation de la prise en charge du téléchargement du fichier par le dispositif (3) multimédia communicant. Selon les diverses variantes de réalisation, et notamment selon le type de terminal communicant et le type de réseau utilisé pour ces transactions, cette confirmation pourra consister en un message affiché sur le terminal (1) communicant alors qu'il est encore sur l'interface de gestion ou pourra consister en un SMS ou en un message email ou tout type de notification. Ces possibilités pourront avoir été configurées par l'utilisateur lors de sa commande. Une fois que le module (CT) de contrôle de téléchargement a reçu une confirmation de fin de téléchargement des données concernant le fichier, il peut ensuite requérir le téléchargement du fichier par le dispositif. Ainsi, dans certains modes de réalisation, le module (CT) de contrôle de téléchargement comporte des moyens de création et d'envoi, vers le dispositif (3) multimédia communicant, d'une demande de lancement du téléchargement par le dispositif (3) multimédia communicant. Dans d'autres variantes, le dispositif (3) multimédia communicant lance le téléchargement automatiquement lorsqu'il a reçu les données concernant le fichier, sans nécessiter de demande par le module (CT) de contrôle de téléchargement.

Les moyens (30) de traitement du dispositif (3) multimédia communicant sont agencés pour le lancement du téléchargement par le dispositif (3) multimédia et pour créer et transmettre au module (CT) de contrôle de téléchargement, une confirmation de fin de téléchargement du fichier. Dans certains modes de réalisation, le module (CT) de contrôle de téléchargement et le dispositif (3) multimédia communicant coopèrent lors du téléchargement du fichier pour indiquer au module (CT) de contrôle de téléchargement l'état d'avancement du téléchargement du fichier.

Le module (CT) de contrôle de téléchargement comporte des moyens de création et d'envoi, vers le terminal (1) communicant, d'un message de confirmation de la fin du téléchargement du fichier par le dispositif (3) multimédia communicant, de façon à informer l'utilisateur de la disponibilité du fichier dans les moyens (31) de mémorisation de son dispositif (3) multimédia communicant. De même que pour la confirmation de prise en charge du téléchargement, cette confirmation de fin de téléchargement pourra être un message de type SMS ou un email ou tout type de notification (en fonction du type de terminal et/ou d'un choix de l'utilisateur). Ici, il est probable que l'utilisateur ne soit plus connecté sur l'interface de gestion et il est peu probable qu'il suffise d'afficher un message sur cette interface, mais le cas échéant, cette possibilité est envisageable.

De façon particulièrement avantageuse, le système selon l'invention permet donc que le dispositif (3) multimédia télécharge un fichier en l'absence de l'utilisateur, simplement grâce à une commande effectuée par ce dernier sur son terminal (1) communicant. Ainsi, le téléchargement peut se faire pendant un temps relativement long sans aucune gêne pour l'utilisateur. Dans certains variantes, l'utilisateur pourra également spécifier au bout de combien de temps il souhaite que le fichier soit disponible. Ainsi, l'équipement (2) opérateur pourra gérer l'utilisation de la bande passante en fonction des urgences définies par les différents utilisateurs qui ont commandé un téléchargement. L'utilisation de bande passante pourra être ainsi optimisée et, pour un téléchargement donné, la bande passante utilisée pourra varier au cours du temps en fonction d'une gestion réalisée par l'équipement opérateur en fonction des demandes ponctuelles au sein du réseau et des commandes de fichier enregistrées avec une urgence définie. Dans le cas particulier d'un fichier protégé par un système de protection numérique de type DRM, les moyens (30) de traitement du dispositif (3) multimédia communicant sont agencés pour obtenir du module (CT) de contrôle de téléchargement, du module (GT) de gestion de téléchargement ou d'un autre module ad hoc de l'équipement (2) opérateur, des droits relatifs à la lecture du fichier et pour décrypter le fichier grâce à ces droits obtenus. Ainsi, le module (CT) de contrôle de téléchargement, le module (GT) de gestion de téléchargement ou un autre module ad hoc de l'équipement (2) opérateur est agencé pour fournir, en réponse à une requête d'un dispositif (3) multimédia communicant, des droits relatifs à la lecture du fichier dans le cas particulier d'un fichier protégé par un système de protection numérique de type DRM.

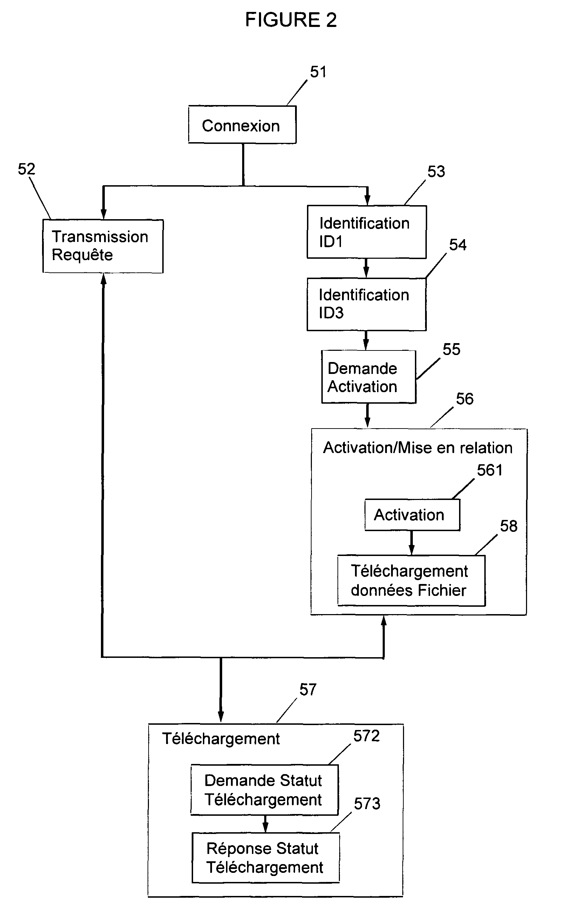

Le système décrit précédemment permet la mise en oeuvre du procédé selon l'invention. Comme particulièrement visible sur la figure 2, ce procédé comporte une étape de connexion (51) du terminal (1) communicant à un module (GT) de gestion de téléchargement de l'équipement (2) opérateur, via au moins un réseau (N) de communication. Le procédé comporte également une étape de transmission (52), du terminal (1) communicant vers le module (GT) de gestion de téléchargement, d'une requête de téléchargement de fichier comportant au moins un identifiant de localisation (IL) du fichier à télécharger. Grâce à cette requête, l'utilisateur identifie le fichier qu'il souhaite obtenir, éventuellement avec l'urgence qu'il définit. Dans une variante de réalisation, le procédé comporte également une étape (520) d'enregistrement, par le module (GT) de gestion, de la requête de téléchargement dans une base de données de l'équipement opérateur. Dans certaines variantes de réalisation, cet envoi de requête est accompagné d'un affichage d'un coût du téléchargement pour l'utilisateur. Selon diverses variantes, ce coût pourra être acquitté directement lors de la requête ou être reporté directement sur une facture des services de son terminal (1) communicant ou sur une facture des services de son dispositif (3) multimédia. Le coût de la commande proprement dite pourra naturellement également être rajouté ou intégré dans le coût du téléchargement. Comme expliqué plus loin, cette transmission de la requête est une étape nécessaire au téléchargement. Cependant, elle pourra être mise en oeuvre dès que l'utilisateur a choisi le fichier ou nécessiter des vérifications préalables, comme expliqué ci-après. L'étape de transmission (52) de la requête de téléchargement de fichier est précédée d'une étape de consultation (49), par l'utilisateur, d'un catalogue de fichiers téléchargeables sur une interface utilisateur du module (GT) de gestion, et comporte une étape de sélection (50), par l'utilisateur, d'au moins un fichier à télécharger, grâce à des moyens (10) d'interface utilisateur et à un module de navigation (MN) du terminal (1) communicant permettant l'accès à cette interface utilisateur du module (GT) de gestion de l'équipement (2) opérateur.

Le procédé comporte une étape d'identification (53) de l'utilisateur émetteur de la requête par un module (MI) d'identification de l'équipement (2) opérateur, grâce à au moins un identifiant (ID1) transmis par le terminal (1) communicant. Comme mentionné précédemment, cet identifiant (ID1) pourra, par exemple, être le numéro MSISDN du téléphone mobile de l'utilisateur. Selon divers modes de réalisation de l'invention, cette étape d'identification (53) de l'utilisateur émetteur de la requête est mise en oeuvre grâce à au moins un identifiant (ID1) reconnu par le module d'identification (MI) lors de la connexion (51) du terminal (1) communicant au module (GT) de gestion de téléchargement ou lors de la transmission (52) de la requête de téléchargement de fichier par le terminal (1) communicant vers le module (GT) de gestion de téléchargement.

Le procédé comporte également une étape d'identification (54) d'au moins un identifiant (ID3) d'au moins un dispositif (3) multimédia communicant de l'utilisateur, par le module (MI) d'identification de l'équipement (2) opérateur, à partir de l'identifiant (ID1). Ainsi, lorsque le terminal (1) communicant se connecte à l'interface du module (GT) de gestion, il s'identifie et permet l'identification automatique du dispositif (3) multimédia de l'utilisateur qui doit télécharger le fichier commandé. Dans certains modes de réalisation, l'étape d'identification (54) d'au moins un identifiant (ID3) d'au moins un dispositif (3) multimédia communicant de l'utilisateur comporte une étape de consultation (541), par le module (MI) d'identification de l'équipement (2) opérateur, d'une base de données (DBU) de l'équipement (2) opérateur stockant une pluralité d'identifiants (ID1) d'utilisateurs en relation chacun avec au moins un identifiant (ID3) d'au moins un dispositif (3) multimédia communicant de l'utilisateur. Comme mentionné précédemment, les identifiants utilisés pourront de divers types. Par exemple, l'identifiant (ID1) du terminal (1) communicant pourra être le numéro MSISDN de son téléphone mobile, par exemple même si le terminal (1) communicant à partir duquel il accède à l'interface de gestion du module (GT) de gestion est un ordinateur ou un autre type de terminal qu'un téléphone mobile. Dans diverses variantes, divers identifiants pourront être utilisés. Ainsi, les opérateurs auront recueilli auprès des utilisateurs les informations concernant leurs terminaux communicants et leurs dispositifs (3) multimédia. Dans le cas de plusieurs opérateurs coopérant pour former l'équipement (2) opérateur au sens de la présente invention, une base de données mise en commun permettra d'effectuer ces étapes d'identification. Comme mentionné précédemment, les étapes (53 et 54) d'identification peuvent être simplifiée par l'envoi de l'identifiant (ID3) du dispositif (3) multimédia directement par le terminal (1) communicant.

Le procédé comporte une étape d'envoi (55), par un module (CT) de contrôle de téléchargement de l'équipement (2) opérateur, vers le dispositif (3) multimédia communicant, d'une demande d'activation du dispositif (3) multimédia communicant et de mise en relation avec le module (CT) de contrôle de téléchargement de l'équipement (2) opérateur. Dans certains modes de réalisation, cette étape d'envoi (55) de la demande d'activation et de mise en relation comporte une étape d'envoi (551), par le module (CT) de contrôle du téléchargement, d'un ordre d'activation des moyens (30) de traitement du dispositif (3) multimédia et d'une demande d'indication de l'espace de stockage disponible dans des moyens (31) de mémorisation du dispositif (3) multimédia communicant.

En réponse à cette demande d'activation de mise en relation, le dispositif (3) multimédia va s'activer, par exemple grâce aux mécanismes décrits précédemment en référence au système selon l'invention. Ainsi, le procédé comporte une étape d'activation (56) du dispositif (3) multimédia communicant et de mise en relation avec le module (CT) de contrôle de téléchargement. Dans certains modes de réalisation, cette étape d'activation (56) du dispositif (3) multimédia communicant et de mise en relation avec le module (CT) de contrôle de téléchargement comporte une étape d'activation (561) des moyens (30) de traitement du dispositif (3) multimédia et de consultation des moyens (31) de mémorisation pour déterminer l'espace disponible puis une étape de réponse (562) du dispositif (3) multimédia indiquant l'espace disponible au module (CT) de contrôle de téléchargement. Dans certains modes de réalisation, le procédé comporte également une étape (563) de demande, par le module (CT) de téléchargement au dispositif (3) multimédia, du téléchargement de données concernant le fichier. Comme expliqué précédemment en référence au système, les diverses étapes décrites ici pourront être mises en oeuvre selon un ordre différent, de façon à ce que l'équipement (2) opérateur sache que la place nécessaire au téléchargement est disponible sur le dispositif (3) multimédia tout en lui indiquant la taille du fichier à télécharger.

L'étape d'activation (56) du dispositif (3) multimédia communicant et de mise en relation avec le module (CT) de contrôle de téléchargement comporte une étape de téléchargement (58), par le dispositif (3) multimédia communicant, à partir du module (CT) de contrôle de téléchargement, de données concernant le fichier à télécharger et représentatives au moins de la taille du fichier à télécharger et de l'identifiant de localisation (IL) du fichier à télécharger. Ainsi, cette étape de téléchargement (58) des informations pourra être mise en oeuvre spontanément par le dispositif (3) multimédia lorsque l'équipement (2) opérateur lui a ordonné de s'activer ou suite à une demande (563) par le module (CT) de contrôle. Dans certains modes de réalisation, l'étape de téléchargement (58) de données concernant le fichier à télécharger comporte une étape de lancement (581) du téléchargement des données concernant le fichier à télécharger, par le dispositif (3) multimédia communicant, puis une étape de demande (582) du statut de ce téléchargement, par le module (CT) de contrôle de téléchargement, suivie d'une étape de réponse (583) par le dispositif (3) multimédia communicant indiquant au module (CT) de contrôle de téléchargement l'état d'avancement du téléchargement des données concernant le fichier à télécharger. Dans d'autres variantes, le dispositif (3) multimédia communicant pourra envoyer spontanément et régulièrement un état d'avancement, sans nécessiter de demande par le module (CT) de contrôle. Dans d'autres variantes, ces étapes seront omises, par exemple au profit d'une seule étape d'envoi (584) d'une confirmation de la fin du téléchargement des données concernant le fichier. Dans divers modes de réalisation, l'étape de téléchargement (58) de données concernant le fichier à télécharger comporte une étape d'envoi (584), par le dispositif (3) multimédia communicant vers le module (CT) de contrôle de téléchargement, d'une confirmation de fin de téléchargement des données concernant le fichier et de prise en charge du téléchargement du fichier. Lorsqu'il reçoit cette confirmation, le module (CT) de contrôle de téléchargement transmet cette confirmation au module (GT) de gestion de téléchargement qui met alors en oeuvre une étape d'envoi (585), vers le terminal (1) communicant émetteur de la requête, d'un message de confirmation de la prise en charge du téléchargement du fichier par le dispositif (3) multimédia communicant. Comme expliqué précédemment, ce message pourra être affiché directement sur les moyens (10) d'interface du terminal (1) communicant encore connecté à l'interface du module (GT) de gestion ou être un message SMS ou un email etc.(éventuellement selon un choix de l'utilisateur, par exemple enregistré dans une configuration proposée sur l'interface de gestion)

Dans certains modes de réalisation, l'étape d'envoi (584), par le dispositif (3) multimédia communicant vers le module (CT) de contrôle de téléchargement, d'une confirmation de fin de téléchargement des données concernant le fichier, est suivie d'une étape (570) de demande, par le module (CT) de contrôle de téléchargement, du lancement du téléchargement par le dispositif (3) multimédia communicant. Dans certains variantes, le dispositif (3) multimédia communicant pourra lancer le téléchargement dès qu'il a terminé le téléchargement et l'analyse des données concernant le fichier (par exemple les données de localisation et de taille, de résolution, de bit-rate, etc.).

L'étape de connexion (51) du terminal (1) au module (GT) de gestion peut, dans certains modes de réalisation, être suivie directement de la mise en oeuvre des étapes d'identification (53) de l'utilisateur et d'identification (54) du dispositif (3) multimédia, puis des étapes (55 et 56) nécessaires à l'activation du dispositif (3) multimédia et à la récupération des données nécessaires au téléchargement. Ainsi, l'étape de transmission (52) de la requête proprement dite ne sera faite que lorsqu'on a établi tous les liens nécessaires au téléchargement et vérifié l'existence du dispositif (3) multimédia, sa disponibilité etc. Dans certaines variantes, la consultation (49) du catalogue et la sélection (50) du fichier pourront être conditionnées par l'identification du dispositif (3) multimédia et éventuellement la confirmation de l'espace disponible dans ce dernier.

Une fois les préalables nécessaires effectués, le procédé se poursuit par une étape de téléchargement (57) du fichier par le dispositif (3) multimédia communicant.

Dans certains modes de réalisation, l'étape de téléchargement (57) du fichier par le dispositif (3) multimédia communicant comporte une étape de lancement (571) du téléchargement du fichier, par le dispositif (3) multimédia communicant, puis, lorsque le téléchargement du fichier est terminé, une étape d'envoi (574), par le dispositif (3) multimédia communicant vers le module (CT) de contrôle de téléchargement, d'une confirmation de fin de téléchargement du fichier. Dans certaines variantes de réalisation, l'étape de téléchargement (57) du fichier s'accompagne d'au moins une étape de demande (572) du statut de ce téléchargement, par le module (CT) de contrôle de téléchargements, suivie d'une étape de réponse (573) par le dispositif (3) multimédia communicant indiquant au module (CT) de contrôle de téléchargement l'état d'avancement du téléchargement du fichier à télécharger. De façon particulièrement avantageuse, dans certaines variantes, l'étape d'envoi (574) d'une confirmation de fin de téléchargement du fichier est suivie d'une étape d'envoi (575), par le module (CT) de contrôle de téléchargement vers le terminal (1) communicant, d'un message de confirmation de la fin du téléchargement du fichier par le dispositif (3) multimédia communicant, de façon à informer l'utilisateur de la disponibilité du fichier dans les moyens (31) de mémorisation de son dispositif (3) multimédia communicant. Comme expliqué précédemment, cette confirmation pourra prendre la forme d'un SMS, envoyé via un réseau de téléphonie, ou d'un email envoyé via un réseau de type Internet. Les différents serveurs utilisés pour ces différentes étapes ne sont pas détaillés ici car il est évident que l'équipement (2) opérateur pourra intégrer divers types de dispositifs supportant les différentes fonctions décrites ici pour l'envoi des messages et l'interaction de l'utilisateur avec les serveurs, via un terminal (1) communicant. L'homme de métier appréciera aisément les adaptations nécessaires à la mise en oeuvre des diverses variantes de réalisation décrites ici.

Il est également à noter que dans le cas particulier d'un fichier protégé par un système de protection numérique de type DRM, l'étape dite de téléchargement du fichier sera suivie d'au moins une étape de demande des droits relatifs à la lecture du fichier, par le dispositif multimédia communicant vers le module de téléchargement ou un autre module ad hoc de l'équipement opérateur.

De même, toujours dans le cas particulier d'un fichier protégé par un système de protection numérique de type DRM, l'étape de demande des droits relatifs à la lecture du fichier sera suivie d'une étape d'envoi par le module de téléchargement ou un autre module ad hoc de l'équipement opérateur, de ces droits vers le dispositif multimédia communicant, le dispositif multimédia communicant décryptant alors le fichier protégé.

On comprendra que certains modes de réalisation de la présente invention, notamment avec les caractéristiques techniques du port de communication toujours ouvert, de la consultation de la base de données pour trouver l'identifiant un dispositif communicant à partir d'un identifiant de l'utilisateur, et éventuellement de la vérification de l'espace disponible sur le dispositif de téléchargement et/ou de la confirmation de fin de téléchargement, permettent que le système (et le procédé) selon l'invention soi(en)t autonome(s), et ne nécessite(nt) de l'utilisateur que de commander le téléchargement, sans qu'il ait à se préoccuper de ces aspects techniques.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de commande à distance, à partir d'au moins un terminal
(1) communicant, de téléchargement de fichier sur au moins un dispositif (3) multimédia communicant, via au moins un réseau (N) de communication supporté par au moins un équipement (2) opérateur, **caractérisé en ce qu'**il comporte les étapes suivantes :
- transmission (52), du terminal (1) communicant vers un module (GT) de gestion de téléchargement, d'une requête de téléchargement de fichier comportant au moins un identifiant de localisation (IL) du fichier à télécharger,
- identification (54) d'au moins un identifiant (ID3) d'au moins un dispositif (3) multimédia communicant de l'utilisateur, par un module (MI) d'identification de l'équipement (2) opérateur, à partir d'au moins un identifiant (ID1) transmis par le terminal (1) communicant,
- envoi (55), par un module (CT) de contrôle de téléchargement de l'équipement (2) opérateur, vers le dispositif (3) multimédia communicant, d'une demande d'activation du dispositif (3) multimédia communicant et de mise en relation avec le module (CT) de contrôle de téléchargement de l'équipement (2) opérateur,
- activation (56) du dispositif (3) multimédia communicant et mise en relation avec le module (CT) de contrôle de téléchargement,
- téléchargement (57) du fichier par le dispositif (3) multimédia communicant.

2. Procédé selon la revendication 1, **caractérisé en ce que** l'étape de transmission (52) de la requête de téléchargement de fichier est précédée d'une étape de consultation (49), par l'utilisateur, d'un catalogue de fichiers téléchargeables sur une interface utilisateur du module (GT) de gestion, et comporte une étape de sélection (50), par l'utilisateur, d'au moins un fichier à télécharger, grâce à des moyens (10) d'interface utilisateur et à un module de navigation (MN) du terminal (1) communicant permettant l'accès à cette interface utilisateur du module (GT) de gestion de l'équipement (2) opérateur.

3. Procédé selon une des revendications 1 et **Erreur ! Source du renvoi introuvable., caractérisé en ce qu'**il comporte une étape d'identification (53) de l'utilisateur émetteur de la requête par un module (MI) d'identification de l'équipement (2) opérateur, grâce à au moins un identifiant (ID1) transmis par le terminal (1) communicant, cette étape étant mise en oeuvre grâce à au moins un identifiant (ID1) reconnu par le module d'identification (MI) lors d'une étape de connexion (51) du terminal (1) communicant au module (GT) de gestion de téléchargement ou lors de la transmission (52) de la requête de téléchargement de fichier par le terminal (1) communicant vers le module (GT) de gestion de téléchargement.

4. Procédé selon une des revendications 1 à **Erreur ! Source du renvoi introuvable., caractérisé en ce que** l'étape d'identification (54) d'au moins un identifiant (ID3) d'au moins un dispositif (3) multimédia communicant de l'utilisateur comporte une étape de consultation (541), par le module (MI) d'identification de l'équipement (2) opérateur, d'une base de données (DBU) de l'équipement (2) opérateur stockant une pluralité d'identifiants (ID1) d'utilisateurs en relation chacun avec au moins un identifiant (ID3) d'au moins un dispositif (3) multimédia communicant de l'utilisateur.

5. Procédé selon une des revendications 1 à 4, **caractérisé en ce que** l'étape d'envoi (55) de la demande d'activation et de mise en relation comporte une étape d'envoi (551), par le module (CT) de contrôle du téléchargement, d'un ordre d'activation des moyens (30) de traitement du dispositif (3) multimédia et d'une demande d'indication de l'espace de stockage disponible dans des moyens (31) de mémorisation du dispositif (3) multimédia communicant.

6. Procédé selon une des revendications 1 à 5, **caractérisé en ce que** l'étape d'activation (56) du dispositif (3) multimédia communicant et de mise en relation avec le module (CT) de contrôle de téléchargement comporte une étape d'activation (561) des moyens (30) de traitement du dispositif (3) multimédia et de consultation des moyens (31) de mémorisation pour déterminer l'espace disponible puis une étape de réponse (562) du dispositif (3) multimédia indiquant l'espace disponible au module (CT) de contrôle de téléchargement.

7. Procédé selon une des revendications 1 à 6, **caractérisé en ce que** l'étape de téléchargement (57) du fichier par le dispositif (3) multimédia communicant comporte une étape de lancement (571) du téléchargement du fichier, par le dispositif (3) multimédia communicant, puis, lorsque le téléchargement du fichier est terminé, une étape d'envoi (574), par le dispositif (3) multimédia communicant vers le module (CT) de contrôle de téléchargement, d'une confirmation de fin de téléchargement du fichier.

8. Procédé selon la revendication 7, **caractérisé en ce que** l'étape d'envoi (574) d'une confirmation de fin de téléchargement du fichier est suivie d'une étape d'envoi (575), par le module (CT) de contrôle de téléchargement vers le terminal (1) communicant, d'un message de confirmation de la fin du téléchargement du fichier par le dispositif (3) multimédia communicant, de façon à informer l'utilisateur de la disponibilité du fichier dans les moyens (31) de mémorisation de son dispositif (3) multimédia communicant.

9. Système de commande à distance, à partir d'au moins un terminal (1) communicant, de téléchargement de fichier sur au moins un dispositif (3) multimédia communicant, via au moins un réseau (N) de communication supporté par au moins un équipement (2) opérateur, **caractérisé en ce qu'**il comporte les appareils suivants chacun équipé de moyens de communication via au moins un réseau (N) de communication :
- au moins un dispositif (3) multimédia communicant comportant des moyens (31) de mémorisation et des moyens (30) de traitement agencés notamment pour télécharger au moins un fichier dans ses moyens (31) de mémorisation,
- au moins terminal (1) communicant comportant des moyens (10) d'interface utilisateur permettant l'affichage et la saisie d'informations, et au moins un module (MN) de navigation agencé pour accéder à au moins une interface utilisateur d'au moins un module (GT) de gestion de téléchargement de l'équipement (2) opérateur et transmettre une requête de téléchargement de fichier comportant au moins un identifiant de localisation (IL) du fichier à télécharger,
- au moins un équipement (2) opérateur comportant au moins un module (GT) de gestion de téléchargement fournissant au moins une interface utilisateur pour la commande de fichier, au moins un module (MI) d'identification agencé pour identifier au moins un identifiant (ID1) transmis par les terminaux (1) communicants accédant au module (GT) de gestion, et identifier au moins un dispositif (3) multimédia communicant de l'utilisateur à partir de l'identifiant (ID1) transmis par les terminaux (1), au moins un module (CT) de contrôle de téléchargement agencé pour requérir à distance l'activation et la mise en relation du dispositif (3) multimédia communicant identifié et pour contrôler le téléchargement de fichier par le dispositif (3) multimédia communicant.

10. Système selon la revendication 9, **caractérisé en ce que** le module (MI) d'identification de l'équipement (2) opérateur comporte des moyens de consultation d'une base de données (DBU) de l'équipement (2) opérateur stockant une pluralité d'identifiants (ID1) d'utilisateurs en relation chacun avec au moins un identifiant (ID3) d'au moins un dispositif (3) multimédia communicant de l'utilisateur.

11. Système selon une des revendications 9 et 10, **caractérisé en ce que** les moyens (30) de traitement du dispositif (3) multimédia communicant sont agencés pour qu'au moins un port de communication du dispositif (3) soit toujours ouvert et pour rester à l'écoute des transmissions sur ce port, le module (CT) de contrôle du téléchargement comportant des moyens d'envoi, via ce port, d'un ordre d'activation des moyens (30) de traitement du dispositif (3) multimédia.

12. Système selon une des revendications 9 à 11, **caractérisé en ce que** le module (CT) de contrôle de téléchargement comporte des moyens d'envoi d'une demande d'indication de l'espace de stockage disponible dans les moyens (31) de mémorisation du dispositif (3) multimédia communicant, les moyens de traitement (30) de ce dernier étant agencés pour consulter l'espace disponible dans les moyens (31) de mémorisation et répondre en indiquant l'espace disponible au module (CT) de contrôle de téléchargement.

13. Système selon une des revendications 9 à 12, **caractérisé en ce que** les moyens (30) de traitement du dispositif (3) multimédia communicant sont agencés pour le lancement du téléchargement par le dispositif (3) multimédia et pour créer et transmettre au module (CT) de contrôle de téléchargement, une confirmation de fin de téléchargement du fichier.

14. Système selon la revendication 13, **caractérisé en ce que** le module (CT) de contrôle de téléchargement comporte des moyens de création et d'envoi, vers le terminal (1) communicant, d'un message de confirmation de la fin du téléchargement du fichier par le dispositif (3) multimédia communicant, de façon à informer l'utilisateur de la disponibilité du fichier dans les moyens (31) de mémorisation de son dispositif (3) multimédia communicant.

15. Système selon une des revendications 9 à 14, **caractérisé en ce que** le terminal (1) communicant est un téléphone mobile équipé de moyens d'accès à au moins une passerelle de type Internet du module (GT) de gestion, via au moins un réseau (N) de communication.

16. Système selon la revendication 15, **caractérisé en ce que** la passerelle de type Internet du module (GT) de gestion est une passerelle de type WAP.

17. Système selon une des revendications 9 à 16, **caractérisé en ce que** le terminal (1) communicant est un ordinateur équipé de moyens d'accès à au moins une passerelle de type Internet, via au moins un réseau (N) de communication.

18. Système selon une des revendications 9 à 17, **caractérisé en ce que** l'équipement (2) opérateur fournit un réseau de téléphonie avec message de type court pour l'envoi de la confirmation de fin de téléchargement vers le terminal (1) communicant et/ou un réseau de type Internet et/ou WAP pour l'accès du terminal (1) communicant au module de gestion (GT) de téléchargement et un réseau de type xDSL entre le module (CT) de contrôle de téléchargement et le dispositif (3) multimédia communicant.
